# EUROPEAN PATENT APPLICATION

(11) **EP 2 169 646 A1**
(43) Date of publication of application: **31.03.2010**
(21) Application number: 08787644.7
(22) Date of filing: 30.05.2008
(51) Int. Cl.: G08G 1/04, G08G 1/056

(54) **METHOD FOR DETECTING THE PRESENCE OF MOVING OBJECTS**

(30) Priority: 08.06.2007 ES 200701682
(71) Applicant: Autopistas Concesionaria Española S.A., 08040 Barcelona (ES)
(72) Inventor: RIOLA, Joan Martí, E-08040 Barcelona (ES)
(74) Representative: Gislon, Gabriele
(86) International application number: PCT/ES2008/070110
(87) International publication number: WO 2008/148925

(57) **Abstract**

The invention relates to a method for detecting the presence of moving objects, comprising the use of a detection system for:
- emitting a series of electromagnetic radiation beams by means of emitting devices (De) of a transmitting unit (1), which are aligned to form at least one emitting column (E1),
- receiving said electromagnetic radiation beams at receiving devices (Dr) of a receiving unit (2), which are aligned to form at least one receiving column (R1) facing the emitting column (E1),
- detecting the interception of said beams by means of the detection of the absence of reception by at least one of the receiving devices (Dr), and generating a signal of detection of the presence of a moving object according to the number of receiving devices (Dr) detecting an absence of electromagnetic radiation reception being above a pre-determined number greater than two.

## Description

### Field of the Art

The present invention generally relates to a method for detecting the presence of moving objects which comprises using a detection system with a transmitting unit and a receiving unit for electromagnetic radiation, each of which is arranged on either side of a roadway, and particularly to a method for detecting which comprises generating a signal of detection of the presence of a moving object according to the number of receiving devices detecting the cutoff of beams of said electromagnetic radiation being above a pre-determined number.

### Prior State of the Art

Detection systems for detecting the presence of moving objects are known which, by means of using a transmitting unit and a receiving unit for electromagnetic radiation, generally infrared radiation, create a barrier or curtain of beams which, upon being traversed by an object, cause the receiving unit to detect such interference and act accordingly, either to count the number of detected objects, determine the type of detected objects or to generate a corresponding alarm.

One of said systems is described in patent ES-A-2144958, belonging to the public domain, in which the electromagnetic radiation beams emitted travel over a plane, which overlap at least partially, and are successively emitted in the form of pulses, which impinge on the receiving device which sends the information about the signals received at a given instant to a control unit, which compares said information about the signals received at a given instant with the information received in the absence of objects interfering with said electromagnetic wave beams and analyzes said comparison to determine whether or not there is presence of an object in said plane of detection. Said patent even proposes determining the movement direction of the detected objects, generally vehicles traveling over a roadway, by means of placing a second set of emitting elements and of receiving elements in a plane parallel to the mentioned plane of detection, separated a certain distance and connected to the same control unit, which determines with the additional information received from said second set of emitting and receiving elements, the mentioned movement direction of the detected objects.

Another of such proposals is in patent application EP-A-0563516, which relates to an optical barrier for detecting moving objects which comprises a transmitting unit arranged on one side of a roadway and with a series of infrared-emitting diodes multiplexed and modulated at a predetermined frequency, a receiving unit arranged on the other side of the roadway with a series of infrared photoreceivers, and electronic equipment comparing the electric signals generated by each of the photoreceivers with a respective reference signal for the purpose of determining, depending on the result of said comparison, if an object has invaded the area of detection of the optical barrier.

The detection systems mentioned and described in both the mentioned documents are generally applied to the detection of the passage of vehicle traveling over a roadway, and do not take into account that some of electromagnetic radiation beams can be cut off by another type of unwanted objects which are not said vehicles (such as birds, leaves, splashes, etc.), thus causing false detections.

In addition, the detection of the movement direction of the vehicles traveling over a roadway carried out in patent ES-A-2144958 by means of using respective sets of emitting elements and receiving elements in respective parallel planes has several drawbacks in addition to the possibility of false detections mentioned above.

These drawbacks are due to the fact that it is also possible to obtain false detections upon detecting not only the presence but also the movement direction of some of the unwanted objects mentioned above, as well as upon detecting elements of the actual vehicles moving in a direction opposite to that of the vehicle, such as the flaps which some trucks have, and erroneously confusing the detections of said elements and their movement directions with supposed detections of vehicles traveling backward, when such vehicles are actually traveling forward.

### Description of the Invention

It seems to be necessary to offer an alternative to the state of the art which overcomes the drawbacks mentioned in the previous section, preventing false detections both of presence and of travel directions of the moving objects detected.

To that end, the present invention relates to a method for detecting the presence of moving objects, which comprises using a detection system with a transmitting unit and a receiving unit for electromagnetic radiation, in general infrared rays, each of which is arranged on either side of a roadway. The method comprises:
- emitting a series of electromagnetic radiation beams by means of a series of emitting devices of said transmitting unit, which are aligned to form at least a first emitting column,
- receiving said electromagnetic radiation beams at a series of receiving devices of said receiving unit, which are aligned to form at least a first receiving column facing said first emitting column,
- using a first electronic system in connection with said receiving devices to detect the interception of one or more of said beams by means of the detection of the absence of reception by at least one of said receiving devices, and to generate a corresponding signal of detection of the presence of a moving object according to at least said detection of absence of reception by at least said receiving device.

Unlike the known proposals, the method proposed by the present invention comprises generating said signal of detection of the presence of a moving object not directly when a detection in one of the receiving devices occurs, but rather according to one or more conditions being fulfilled, the main condition being that the number of receiving devices detecting an absence of electromagnetic radiation reception is above a pre-determined number greater than two.

False detections caused by the aforementioned unwanted objects in the detection systems using conventional methods for detecting are thus prevented, thus only taking into account those objects of a certain magnitude, the passage of which through the area covered by the detection system activates at least two receiving devices.

For one embodiment, the method comprises generating said signal of detection of the presence of a moving object also according to the location of the receiving devices detecting an absence of electromagnetic radiation reception, weighting the receiving devices according to their location, giving a lower weight to the receiving devices in which it is considered that it is easier for the mentioned unwanted objects to be able to interfere.

Although the proposed method is applicable for detection systems with a transmitting unit and a receiving unit with only a respective emitting column and a respective receiving column, the proposed method generally also comprises:
- emitting a series of electromagnetic radiation beams by means of a series of emitting devices of said transmitting unit, which are aligned to form a second emitting column,
- receiving said electromagnetic radiation beams emitted by the emitting devices of the second emitting column and/or those emitted by the emitting devices of the first emitting column at a series of receiving devices of said receiving unit, which are aligned to form a second receiving column facing said second emitting column,
- using said first electronic system to detect the interception of one or more of said beams by means of the detection of also the absence of reception by at least one of the receiving devices of the second receiving column, and to generate:
   - said corresponding signal of detection of the presence of a moving object also according to said detection of absence of reception by said receiving device of the second receiving column, and/or
   - a signal of detection of travel direction of said moving object according to at least two consecutive detections by at least one receiving device of the first receiving column and one of the second reception column, or vice versa.

The emitting devices and the receiving devices (generally both referred to as sensors), of the respective emitting and receiving columns are equispaced in height.

For the purpose of increasing the spatial resolution of the detection system used, the method comprises, in relation to the vertical resolution, carrying out readings of receiving devices located at a different level, i.e., emitting at least one electromagnetic radiation beam by means of an emitting device located at a determined height towards at least one receiving device located at a height different from said determined height, and using the first electronic system to detect a possible interception of at least said beam inclined vertically.

In relation to the increase of the spatial resolution in the horizontal direction, the method comprises carrying out readings of receiving devices located in different columns, i.e., emitting at least one electromagnetic radiation beam by means of an emitting device of one of said emitting columns towards at least one receiving device of the receiving column which is not facing the emitting column from which said beam has been emitted, and using the first electronic system to detect a possible interception of at least said beam inclined horizontally.

These extra scans of (vertically and horizontally) crossed sensors are carried out, for a preferred embodiment, at the height at which the hitch of trailers is normally located, for the purpose of not confusing a vehicle with a trailer with two vehicles, the detection system, when it is operated according to the proposed method, not separating a vehicle from its trailer, considering them as a single one.

For one embodiment, the mentioned radiation beams are directional beams, although for another more preferred embodiment they are divergent beams, for example conically divergent beams, thus enabling achieving the described increase of the spatial resolution more easily.

In the event of detecting a malfunction of any emitting device and/or of any receiving device, the method proposed by the present invention comprises deleting the malfunctioning device or devices, not taking into account the emissions and/or receptions of the deleted devices until it is detected that they function correctly again. For example, an emitting device which "is not seen" by any of the receiving devices of its level is deleted until it is seen again, and a receiving device which "does not see" any of the emitting devices of its level is also deleted until the correct situation is recovered.

The proposed method also comprises controlling, by means of the first electronic system and/or by means of a second electronic system, the receiving devices and/or the emitting devices for their sequential activation and/or output signal amplification and/or synchronization.

As has been previously mentioned, the moving objects to be detected are generally automotive vehicles.

In relation to the applications of the proposed method, the latter comprises using the signals of detection of presence and the signals of detection of travel direction to count the automotive vehicles which have passed through the detection system and/or to check the type of vehicle and/or to verify the payments made in a tollbooth, or for any other application considered to be suitable by a person skilled in the art.

### Brief Description of the Drawings

The previous and other advantages and features will be more fully understood from the following detailed description of several embodiments with reference to the sole attached figure, which must be taken as a non-limiting illustration, in which:

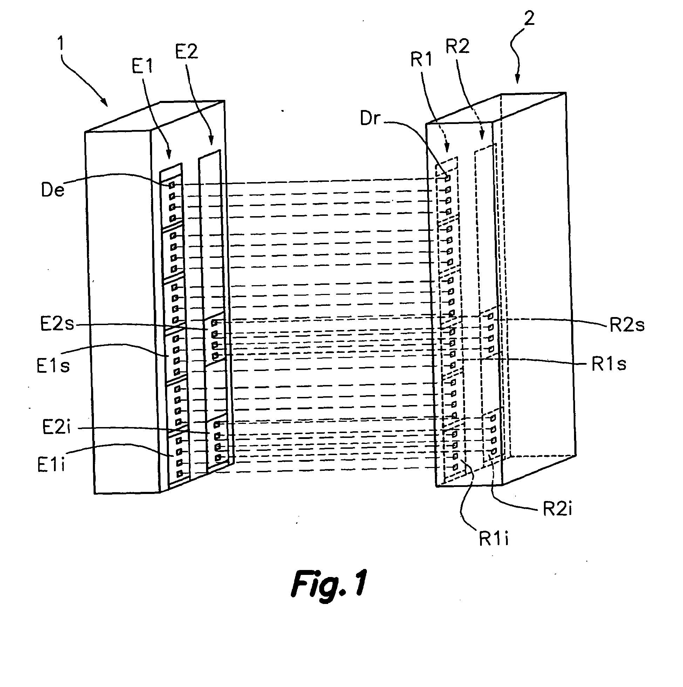

Figure 1 is a perspective view schematically showing the detection system used by the method proposed by the present invention, for an embodiment.

### Detailed Description of Several Embodiments

It must first be emphasized that although Figure 1 shows the electromagnetic radiation beams as directional beams, this has been done for the sake of clarity, since, as has been previously mentioned, such beams will more preferably be divergent beams for the purpose of increasing the spatial resolution.

Figure 1 shows a detection system with a transmitting unit 1 and a receiving unit 2 for electromagnetic radiation, each of which is arranged on either side of a roadway, and each of which has the aforementioned first and second emitting columns E1, E2 and receiving columns R1, R2, formed respectively by a plurality of emitting devices De and receiving devices Dr.

The front part of the receiving unit 2 has been drawn in Figure 1 with dotted lines to allow observing the elements arranged in said front part, for the sake of greater clarity in the drawing.

Although both the emitting devices De and the receiving devices Dr have been shown as simple rectangles in perspective view, for a preferred embodiment each of them comprises a small circuit with two or more sensors each, for the purpose of obtaining a redundancy increasing the fault tolerance.

For the purpose of increasing even more the efficiency of the proposed method when preventing the mentioned false detections, for one embodiment the method comprises generating said signal of detection of travel direction of a moving object also according to the location of the receiving devices Dr detecting an absence of electromagnetic radiation reception, weighting the receiving devices Dr according to their location, said weighting consisting, for one embodiment, of giving a greater weight to the receiving devices Dr located at a lower height within their respective receiving column R1, R2, and for another embodiment, of assigning a lower weight to the receiving devices Dr located in one of said receiving columns R1, R2 with respect to the weight assigned to those of the other receiving column R2, R1.

In said Figure 1 it can be seen how both the emitting devices De and the receiving devices Dr are grouped forming respective subgroups, specifically six subgroups in the first columns E1 and R1, two of which are indicated as E1s, E1i and R1s, R1i, and two subgroups E2s, E2i and R2s R2i in the second columns E2, R2.

The method proposed by the invention comprises, for the purpose of generating said signal of detection of travel direction of the moving object, using the emitting devices De and the receiving devices Dr of said subgroups E1s, E2s, E1i, E2i, R1s, R2s, R1i, R2i, although for another embodiment, not shown, the number and arrangement of subgroups to be used by the method for detecting the travel direction can be different from the one shown.

As can be seen in Figure 1 two of said subgroups E1s, E2s of emitting devices De are located at a determined height facing two corresponding subgroups R1s, R2s of receiving devices Dr, and another two of said subgroups E1i, E2i of emitting devices De are located at a height lower than said determined height facing another two corresponding subgroups R1i, R2i of receiving devices Dr.

In relation to the mentioned generated signal of detection of travel direction of the moving object, it is a signal representative of:
- the travel direction of entrance of the moving object into the area covered by the detection system, in which case said consecutive detections by at least one receiving device Dr of the first receiving column R1 and one of the second receiving column R2 are detections of absence of beam reception,
   and/or
- the travel direction of exit of the moving object from the area covered by the detection system, in which case said consecutive detections by at least one receiving device Dr of the first receiving column R1 and one of the second receiving column R2 are detections of new presences of beam reception after corresponding absences.

For a preferred embodiment, the generated signal of detection of travel direction of the moving object is representative of both the travel direction of entrance and that of exit, also known, respectively, as leading and trailing directions. The diversity of the forms that the vehicles have at their front part (grilles, bumpers,..) and rear part (flaps, bars,...) complicates the detection of the travel direction.

The method comprises, for the purpose of determining the travel direction of the moving object of entrance into the area covered by the detection system and/or of exit therefrom, considering not only said consecutive detections of absence and/or presence of new beam reception by a receiving device Dr of the first receiving column R1 and one of the second receiving column R2, but also considering for the rest of the receiving devices Dr of the first subgroups R1s, R1i and of the second subgroups R2s, R2i corresponding consecutive detections of absence and/or presence of new beam reception coming from the rest of the receiving devices Dr of the first subgroups E1s, E1i and of the second subgroups E2s, E2i.

With reference first to the determination of the entrance direction of the moving object, to that end the method comprises establishing for every two receiving devices Dr, one of the first column R1 and the other one of the second column R2, a positive entrance direction when the corresponding consecutive detections of absence of beam reception occur starting with the receiving device Dr of the first column R1 and continuing with that of the second column R2, and a negative entrance direction when the corresponding consecutive detections of absence of beam reception occur starting with the receiving device Dr of the second column R2 and continuing with that of the first column R1.

The method specifically comprises establishing that the moving object has entered the area covered by the detection system with a forward travel direction when at least part of said consecutive detections of absence of beam reception with positive entrance direction occur in a time less than a pre-determined value marked by a threshold corresponding, for one embodiment, to an entrance speed of about 70 Km/h, the detection of which clearly shows that it corresponds to the entrance speed of an automotive vehicle, which causes that in the event that there were other consecutive detections (by other receiving devices Dr) of negative entrance directions, they would correspond to the aforementioned unwanted objects, either external or belonging to the actual vehicle, and will not be taken into consideration as they are considered false detections.

There are cases in which it is not so clear that the moving object detected is an automotive vehicle, since it does not travel at the speed indicated above, i.e., since the consecutive detections do not occur in a time greater than the mentioned pre-determined value. For said cases the method comprises different strategies to be followed to establish the entrance direction of the moving object, which will be described below by means of several embodiments.

For one embodiment, the method comprises establishing that the moving object has entered the area covered by the detection system with a forward or backward travel direction, when all the consecutive detections of absence of beam reception of all the receiving devices Dr of at least two of the receiving subgroups R1s-R2s or R1i-R2i, one of each of the two receiving columns R1, R2, establish, respectively, a positive or negative entrance direction.

If, on the other hand, there is no such unanimity in relation to the entrance direction established for all the consecutive detections of absence of beam reception of all the receiving devices Dr of at least two of the receiving subgroups R1s, R2s or R1i, R2i, one of each of the two receiving columns R1, R2, the method comprises establishing that the moving object has entered the area covered by the detection system with a forward travel direction if the majority of the established entrance directions are positive, and establishing a backward travel direction if the majority of the established entrance directions are negative, i.e., that if each detection of direction established by each pair of receiving devices Dr, one of each column R1, R2, is considered as a vote, the method comprises adding said votes and considering as valid the direction indicated by the majority.

For another embodiment, the method comprises weighting said votes.

For the mentioned case in which there is no unanimity in relation to the entrance direction established for all the consecutive detections of absence of beam reception of all the receiving devices Dr of at least two of the receiving subgroups R1s, R2s or R1i, R2i, one of each of the two receiving columns R1, R2, if there is, for all the receiving subgroups R1s, R2s, R1i and R2i, the same number of positive entrance directions as negative entrance directions established, the method comprises establishing that the moving object has entered the area covered by the detection system with a forward travel direction if the entrance direction established by the first consecutive detections has been positive, and backward if it has been negative.

If in said case in which there is no unanimity in relation to the entrance direction established for all the consecutive detections of absence of beam reception of all the receiving devices Dr of at least two of the receiving subgroups R1s, R2s or R1i, R2i, one of each of the two receiving columns R1, R2, and there is one and the same number of positive entrance directions as negative entrance directions established for all the receiving subgroups R1s, R2s, R1i and R2i, if the first consecutive detections have not allowed establishing a determined direction, the method comprises establishing that the moving object has entered the area covered by the detection system with a forward travel direction if the entrance direction established by the consecutive detections of the receiving devices Dr located in the lowest positions of the receiving columns R1, R2 which have allowed establishing the direction, has been positive, and backward if it has been negative. The reason for this is that at the level of the wheel of the vehicle (a few cm from the ground), the presence of foreign forms is more difficult.

In relation to the determination of the exit direction of the moving object, to that end the method comprises establishing for every two receiving devices Dr, one of the first column R1 and the other one of the second column R2, a positive exit direction when the corresponding consecutive detections of presence of new beam reception occur starting with the receiving device Dr of the first column R1 and continuing with that of the second column R2, and a negative exit direction when the corresponding consecutive detections of presence of new beam reception occur starting with the receiving device Dr of the second column R2 and continuing with that of the first column R1.

In a manner similar to that set forth above for the entrance direction, the method comprises establishing that the moving object has exited the area covered by the detection system with a forward travel direction when at least part of said consecutive detections of presence of new beam reception with positive exit direction occur in a time less than a pre-determined value, marked by a threshold corresponding, for example, to an exit speed of about 70 Km/h, the detection of which clearly shows that it corresponds to the exit speed of an automotive vehicle, which causes that in the event that there were other consecutive detections (by other receiving devices Dr) of negative exit directions, they would correspond to the aforementioned unwanted objects.

As for the detection of the entrance direction, there are cases in which it is not so clear that the moving object detected is an automotive vehicle, since it does not travel at the speed indicated above, i.e., since the consecutive detections (in this case of presence of new beam reception) do not occur in a time greater than the mentioned pre-determined value.

For said cases the method comprises establishing that the moving object has exited the area covered by the detection system with a forward or backward travel direction by means of the analysis of the exit directions established by the consecutive detections of presence of new beam reception of the receiving devices Dr of all the receiving subgroups R1s, R2s, R1i, R2i.

Said analysis is carried out by means of studying two variables which add results of the application of criteria on the established exit directions, a first one of said variables adding the results when they express a positive exit direction, and a second one of said variables adding the results when they express a negative exit direction.

The mentioned criteria are the following, any or preferably all the indicated criteria being used:
- Criterion 1: majority of identical exit directions established by the consecutive detections of presence of new beam reception of the receiving devices Dr of the subgroups of greater height R2s, R1s,
- Criterion 2: majority of identical exit directions established by the consecutive detections of presence of new beam reception of the receiving devices Dr of the subgroups of lower height R2i, R1i,
- Criterion 3: last consecutive detection of presence of new beam reception of the receiving devices Dr of the upper subgroups R2s, R1s,
- Criterion 4: last consecutive detection of presence of new beam reception of the receiving devices Dr of the lower subgroups R2i, R1i, and
- Criterion 5: exit direction established by the consecutive detections of presence of new beam reception of the receiving devices Dr located in the lowest positions of the receiving columns R1, R2.

The method comprises establishing that the moving object has exited the area covered by the detection system with a forward travel direction if said first variable has a value greater than said second variable, or with a backward travel direction if it is the second variable which has a value greater than the first variable.

In other words if, for example, the application of three of the previous criteria offers as a result a positive exit direction and that of the other two criteria offers a negative exit direction, the first variable would be equal to three and the second equal to two, therefore it would be established that the travel direction of exit of the moving object is forward.

For one embodiment, all the criteria have the same weight in said variables, but for another embodiment said variables add the results of the application of said criteria in a weighted manner, giving more value to some criteria than to others.

For the case in which the value of said two variables is the same, the method comprises establishing that the moving object has exited the area covered by the detection system with the same travel direction which has been established for the entrance of the moving object in the area covered by the detection system.

Finally, and once both the travel direction of entrance and that of exit of the moving object with respect to the area covered by the detection system have been established, the method comprises establishing that the moving object is traveling:
- forward if the entrance and exit directions established are both forward,
- backward if the entrance and exit directions established are both backward,
- with forward-backward movement reversal if the entrance direction established is forward and the exit direction established is backward, or
- with backward-forward movement reversal if the entrance direction established is backward and the exit direction established is forward.

A person skilled in the art could introduce changes and modifications in the described embodiments without departing from the scope of the invention as it is defined in the attached claims.

## Claims

1. A method for detecting the presence of moving objects, of the type which comprises using a detection system with at least a transmitting unit (1) and a receiving unit (2) for electromagnetic radiation, each of which is arranged on either side of a roadway, said method being of the type comprising:
- emitting a series of electromagnetic radiation beams by means of a series of emitting devices (De) of said transmitting unit (1), which are aligned to form at least a first emitting column (E1),
- receiving said electromagnetic radiation beams at a series of receiving devices (Dr) of said receiving unit (2), which are aligned to form at least a first receiving column (R1) facing said first emitting column (E1),
- using a first electronic system in connection with said receiving devices (Dr) to detect the interception of at least one of said beams by means of the detection of the absence of reception by at least one of said receiving devices (Dr), and to generate a corresponding signal of detection of the presence of a moving object according to at least said detection of absence of reception by at least said receiving device (Dr), **characterized in that** it comprises generating said signal of detection of the presence of a moving object at least according to the number of receiving devices (Dr) detecting an absence of electromagnetic radiation reception being above a pre-determined number greater than two.

2. The method according to claim 1, **characterized in that** it comprises generating said signal of detection of the presence of a moving object also according to the location of the receiving devices (Dr) detecting an absence of electromagnetic radiation reception, weighting the receiving devices (Dr) according to their location.

3. The method according to claim 1 or 2, **characterized in that** it comprises:
- emitting a series of electromagnetic radiation beams by means of a series of emitting devices (De) of said transmitting unit (1), which are aligned to form a second emitting column (E2),
- receiving said electromagnetic radiation beams emitted by the emitting devices (De) of the second emitting column (E2) and/or those emitted by the emitting devices (De) of the first emitting column (E1) at a series of receiving devices (Dr) of said receiving unit (2), which are aligned to form a second receiving column (R2) facing said second emitting column (E2),
- using said first electronic system to detect the interception of at least one of said beams by means of the detection of also the absence of reception by at least one of the receiving devices (Dr) of the second receiving column (R2), and to generate:
- said corresponding signal of detection of the presence of a moving object also according to said detection of absence of reception by said receiving device (Dr) of the second receiving column (R2), and/or
- a signal of detection of travel direction of said moving object according to at least two consecutive detections by at least one receiving device (Dr) of the first receiving column (R1) and one of the second receiving column (R2), or vice versa.

4. The method according to claim 3, **characterized in that** it comprises generating said signal of detection of travel direction of said moving object according to the location of the receiving devices (Dr) detecting an absence of electromagnetic radiation reception, weighting the receiving devices (Dr) according to their location, and said weighting comprising assigning a greater weight to the receiving devices (Dr) located at a lower height within their respective receiving column (R1, R2).

5. The method according to claim 4 or 3 when it depends on claim 2, **characterized in that** said weighting comprises assigning a lower weight to the receiving devices (Dr) located in one of said receiving columns (R1, R2) with respect to the weight assigned to those of the other receiving column (R2, R1).

6. The method according to claim 3, **characterized in that** for the purpose of generating said signal of detection of travel direction of said moving object, the method comprises using at least part of the emitting devices (De) of the first emitting column (E1) and second emitting column (E2) and at least part of the receiving devices (Dr) of the first receiving column (R1) and second receiving column (R2), forming respective subgroups (E1s, E2s, E1i, E2i, R1s, R2s, R1i, R2i).

7. The method according to claim 6, **characterized in that** two of said subgroups (E1s, E2s) of emitting devices (De) are located at a determined height facing two corresponding subgroups (R1s, R2s) of receiving devices (Dr), and another two of said subgroups (E1i, E2i) of emitting devices (De) are located at a height lower than said determined height facing another two corresponding subgroups (R1i, R2i) of receiving devices (Dr).

8. The method according to any of the previous claims, **characterized in that** it comprises emitting at least one electromagnetic radiation beam by means of an emitting device (De) located at a determined height towards at least one receiving device (Dr) located at a height different from said determined height, and using the first electronic system to detect a possible interception of at least said beam inclined vertically.

9. The method according to any of claims 3 to 8, **characterized in that** it comprises emitting at least one electromagnetic radiation beam by means of an emitting device (De) of one (E1) of said emitting columns (E1, E2) towards at least one receiving device (Dr) of the receiving column (R2) which is not facing the emitting column (E1) from which said beam has been emitted, and using the first electronic system to detect a possible interception of at least said beam inclined horizontally.

10. The method according to claim 3, 6 or 7, **characterized in that** said generated signal of detection of travel direction of the moving object is a signal representative of:
- at least the travel direction of entrance of the moving object into the area covered by the detection system, in which case said consecutive detections, which are at least two in number, by at least one receiving device (Dr) of the first receiving column (R1) and one of the second receiving column (R2) are detections of absence of beam reception,
and/or
- at least the travel direction of exit of the moving object from the area covered by the detection system, in which case said consecutive detections, which are at least two in number, by at least one receiving device (Dr) of the first receiving column (R1) and one of the second receiving column (R2) are detections of new presences of beam reception after corresponding absences.

11. The method according to claim 10 when it depends on claim 6 or 7, **characterized in that** it comprises, for the purpose of determining the travel direction of the moving object of entrance into the area covered by the detection system and/or of exit therefrom, considering not only said consecutive detections of absence and/or presence of new beam reception by a receiving device (Dr) of the first receiving column (R1) and one of the second receiving column (R2), but also considering for the rest of the receiving devices (Dr) of the first subgroups (R1s, R1i) and of the second subgroups (R2s, R2i) corresponding consecutive detections of absence and/or presence of new beam reception coming from the rest of the receiving devices (Dr) of the first subgroups (E1s, E1i) and of the second subgroups (E2s, E2i).

12. The method according to claim 11, **characterized in that** it comprises establishing for every two receiving devices (Dr), one of the first column (R1) and the other one of the second (R2), a positive entrance direction when the corresponding consecutive detections of absence of beam reception occur starting with the receiving device (Dr) of the first column (R1) and continuing with that of the second column (R2), and a negative entrance direction when the corresponding consecutive detections of absence of beam reception occur starting with the receiving device (Dr) of the second column (R2) and continuing with that of the first column (R1).

13. The method according to claim 12, **characterized in that** it comprises establishing that the moving object has entered the area covered by the detection system with a forward travel direction when at least part of said consecutive detections of absence of beam reception with positive entrance direction occur in a time less than a pre-determined value.

14. The method according to claim 13, **characterized in that** it comprises establishing that the moving object has entered the area covered by the detection system with a forward travel direction when all the consecutive detections of absence of beam reception of positive entrance direction occur in a time less than a pre-determined value.

15. The method according to claim 12, **characterized in that** it comprises establishing that the moving object has entered the area covered by the detection system with a forward or backward travel direction when all the consecutive detections of absence of beam reception of all the receiving devices (Dr) of at least two of the receiving subgroups (R1s-R2s or R1i-R2i), one of each of the two receiving columns (R1, R2), establish, respectively, a positive or negative entrance direction.

16. The method according to claim 12, **characterized in that** when there is no unanimity in relation to the entrance direction established for all the consecutive detections of absence of beam reception of all the receiving devices (Dr) of at least two of the receiving subgroups (R1s, R2s or R1i, R2i), one of each of the two receiving columns (R1, R2), the method comprises establishing that the moving object has entered the area covered by the detection system with a forward travel direction if the majority of entrance directions established are positive, and establishing a backward travel direction if the majority of entrance directions established are negative.

17. The method according to claim 16, **characterized in that** in said case in which there is no unanimity in relation to the entrance direction established for all the consecutive detections of absence of beam reception of all the receiving devices (Dr) of at least two of the receiving subgroups (R1s, R2s or R1i, R2i), one of each of the two receiving columns (R1, R2), if there is, for all the receiving subgroups (R1s, R2s, R1i and R2i), the same number of positive entrance directions as negative entrance directions established, the method comprises establishing that the moving object has entered the area covered by the detection system with a forward travel direction if the entrance direction established by the first consecutive detections has been positive, and backward if it has been negative.

18. The method according to claim 17, **characterized in that** in said case in which there is no unanimity in relation to the entrance direction established for all the consecutive detections of absence of beam reception of all the receiving devices (Dr) of at least two of the receiving subgroups (R1s, R2s or R1i, R2i), one of each of the two receiving columns (R1, R2), and there is one and the same number of positive entrance directions as negative entrance directions established for all the receiving subgroups (R1s, R2s, R1i and R2i), if the first consecutive detections have not allowed establishing a determined direction, the method comprises establishing that the moving object has entered the area covered by the detection system with a forward travel direction if the entrance direction established by the consecutive detections of the receiving devices (Dr) located in the lowest positions of the receiving columns (R1, R2) which have allowed establishing the direction, has been positive, and backward if it has been negative.

19. The method according to any of claims 11 to 18, **characterized in that** it comprises establishing for every two receiving devices (Dr), one of the first column (R1) and the other one of the second (R2), a positive exit direction when the corresponding consecutive detections of presence of new beam reception occur starting with the receiving device (Dr) of the first column (R1) and continuing with that of the second column (R2), and a negative exit direction when the corresponding consecutive detections of presence of new beam reception occur starting with the receiving device (Dr) of the second column (R2) and continuing with that of the first column (R1).

20. The method according to claim 19, **characterized in that** it comprises establishing that the moving object has exited the area covered by the detection system with a forward travel direction when at least part of said consecutive detections of presence of new beam reception with positive exit direction occur in a time less than a pre-determined value.

21. The method according to claim 20, **characterized in that** it comprises establishing that the moving object has exited the area covered by the detection system with a forward travel direction when all the consecutive detections of presence of new beam reception with positive exit direction occur in a time less than a pre-determined value.

22. The method according to claim 19, **characterized in that** it comprises establishing that the moving object has exited the area covered by the detection system with a forward or backward travel direction by means of the analysis of the exit directions established by the consecutive detections of presence of new beam reception of the receiving devices (Dr) of all the receiving subgroups (R1s, R2s, R1i, R2i), said analysis being carried out by means of studying two variables which add results of the application of criteria on the established exit directions, a first one of said variables adding the results when they express a positive exit direction, and a second one of said variables adding the results when they express a negative exit direction.

23. The method according to claim 22, **characterized in that** said criteria are at least one of the group including the following criteria, or a combination thereof:
- majority of identical exit directions established by the consecutive detections of presence of new beam reception of the receiving devices (Dr) of the subgroups of greater height (R2s, R1s),
- majority of identical exit directions established by the consecutive detections of presence of new beam reception of the receiving devices (Dr) of the subgroups of lower height (R2i, R1i),
- last consecutive detection of presence of new beam reception of the receiving devices (Dr) of the upper subgroups (R2s, R1s),
- last consecutive detection of presence of new beam reception of the receiving devices (Dr) of the lower subgroups (R2i, R1i), and
- exit direction established by the consecutive detections of presence of new beam reception of the receiving devices (Dr) located in the lowest positions of the receiving columns (R1, R2).

24. The method according to claim 22 or 23, **characterized in that** said variables add said results of the application of said criteria in a weighted manner.

25. The method according to claim 22, 23 or 24, **characterized in that** it comprises establishing that the moving object has exited the area covered by the detection system with a forward travel direction if said first variable has a value greater than said second variable, or with a backward travel direction if it is the second variable which has a value greater than the first variable.

26. The method according to claim 22, 23, 24 or 25, **characterized in that** if the value of said variables is the same, the method comprises establishing that the moving object has exited the area covered by the detection system with the same travel direction which has been established for the entrance of the moving object in the area covered by the detection system.

27. The method according to any of claims 19 to 26, **characterized in that** it comprises establishing that the moving object is traveling:
- forward if the entrance and exit directions established are both forward,
- backward if the entrance and exit directions established are both backward,
- with forward-backward movement reversal if the entrance direction established is forward and the exit direction established is backward, or
- with backward-forward movement reversal if the entrance direction established is backward and the exit direction established is forward.

28. The method according to any of the previous claims, **characterized in that** if a malfunction of any emitting device (De) and/or of any receiving device (Dr) is detected, the method comprises deleting the malfunctioning device or devices, not taking into account the emissions and/or receptions of the deleted devices (De, Dr) until it is detected that they function correctly again.

29. The method according to any of the previous claims, **characterized in that** it comprises controlling, by means of the first electronic system and/or by means of a second electronic system, the receiving devices (Dr) and/or the emitting devices (De) for their sequential activation and/or output signal amplification and/or synchronization.

30. The method according to any of the previous claims, **characterized in that** said moving objects are automotive vehicles.

31. The method according to claim 30, **characterized in that** it comprises using said signals of detection of presence and said signals of detection of travel direction to count the automotive vehicles which have passed through the detection system and/or to check the type of vehicle and/or to verify the payments made in a tollbooth.
